# EUROPEAN PATENT SPECIFICATION

(11) **EP 1 252 770 B1**
(45) Date of publication and mention of the grant of the patent: **16.03.2005**
(21) Application number: 01904989.9
(22) Date of filing: 18.01.2001
(51) Int. Cl.: H04N 7/173

(54) **FLEXIBLE CONTENT DISTRIBUTION METHOD**
FLEXIBLES VERFAHREN ZUR VERTEILUNG VON INHALTEN
PROCEDE DE DISTRIBUTION DE CONTENU SOUPLE

(30) Priority: 21.01.2000 US 489084
(43) Date of publication of application: 30.10.2002
(73) Proprietor: DPHI Aquisitions, Inc., Boulder, Colorado 80301 (US)
(72) Inventor: BRAITBERG, Michael, F., Boulder, CO 80302 (US); VOLK, Steven, B., Boulder, CO 80304 (US)
(74) Representative: Freeman, Jacqueline Carol
(86) International application number: PCT/US2001/002112
(87) International publication number: WO 2001/054410

(56) References cited:
- EP-A- 1 073 222
- WO-A-00/16229
- WO-A-00/43904
- US-A- 5 509 070
- US-A- 5 883 954
- US-A- 5 901 339
- US-A- 6 009 525

## Description

The present invention relates to a method for distributing storable content such as audio, video, text or software content and in particular to a method for distributing and enabling encrypted or otherwise protected content.

### BACKGROUND INFORMATION

As distribution systems for various types of content have historically developed, distribution systems have taken on certain relatively inflexible structures. For example, in distribution of music or motion pictures, a publisher typically produces, or arranges for production of, physical media (such as CDs or video tapes or DVDs), arranges for sales through retail locations, mail order houses (or in the case of movies, to movie rental services), with royalties from the sales going to the content owners. It is believed that a more flexible distribution system, e.g. allowing content owners to decide whether to sell physical media, bitstream content, or both can not only enhance revenue streams for publishers and content owners, but also make content more widely available to consumers.

The need for alternative channels for content distribution is consistent with the popularity of electronic downloading of content, including downloading of MP3-format music and other content. However, electronic downloading, in current forms, is relatively susceptible to misuse, such as copyright violations, depriving content owners of potential revenue. Accordingly, it would be useful to provide for content distribution in a fashion which is relatively flexible and/or which can assist in protecting content owners' rights.

Many traditional approaches to distributing stored content, such as audio, video, text or software content, involve distributing media (such as print media, magnetic or optical media and the like) which, once distributed, can typically be freely used by any person having possession of the media. Such a distribution system, however, imposes certain undesirable restraints on how the content is distributed. For example, in traditional distribution methods, payment (or a contract or commitment to make payment) is obtained at the time the media is distributed. This has a number of consequences. The payment typically must be an all-or-nothing payment, i.e., payment for all content which is on the media, even though a customer may wish to have only a portion of such content. Typically, this manner of distribution means that distribution of the physical media and payment for content must be tightly coupled such as by providing for both distribution and payment at a retail location, by a mail transaction (such as a typical book club transaction), by electronic downloading and electronic commerce, and the like. Such distribution methods have substantial associated costs, such as costs of warehousing, retail personnel, and the like. Accordingly, it would be useful to provide a content distribution system which can be configured such that distribution of the media can be independent from payment or payment commitments, and/or independent from enablement of the content.

In some systems involving electronic storage of information on media, the media which is distributed is encrypted or otherwise read-protected and the user must provide a code such as a password in order to have access to the content. This approach, however, although it may assist in certain schemes for avoiding unauthorized copying, has typically had other associated disadvantages. Such approaches typically provide for coupling the enablement of protected content to a particular computer or media reader, e.g., such that it is cumbersome or impossible to use the media in more than one machine (such as imposing a requirement for remembering, and then entering, the password when the media is provided in a second computer or reader), i.e., there is no provision for the media itself to provide, to a computer or reader, information regarding previous content enablement. When protection codes or keys are established and stored by a media fabricator (or the fabricator of a media player or host computer), or otherwise provided prior to distribution of content to a customer, the system is typically relatively inflexible, provides the potential for using a copy of the code or key to access multiple media, and presents a potential for interception of enabling keys or codes. Additionally, many schemes are configured such that an exact "binary" copy of user-accessible portions of the disk will result in a copy which can be accessed in the same fashion as the source disk. Accordingly, it would be useful to provide a system in which a binary copy of user-accessible portions is at least partially disabled, e.g. requiring a payment to obtain access.

Some systems for producing optical disks allow different disks to have different indicia. Some such systems provide for a step of selectively destroying pre-formatted regions. Such systems have a number of disadvantageous aspects. Systems which selectively destroy pre-formatted regions are inherently destructive and act to destroy, rather than creating recorded data. Such systems operate on pre-formatted regions, thus can not be formed by embossing (which typically occurs simultaneously with formatting). Such systems typically have a relatively coarse resolution, such as being unable to destroy only a single track, without destroying at least one adjacent track). Such systems topically rely on using a specialized device driver to read such a disk, and are typically infeasible for use in modem systems which use a SCSI driver an/or rely on an operating system (such as Windows 98, or the like), for disk read operations. Accordingly, it would be useful to provide a system which can provide disks that have not only information content-mastered data, but also individualizable, preferably unique, identifiers on each disk, using non-destructive track recording.

Many previous distribution systems, especially those relating to electronically or optically stored information, have been designed to prevent or discourage copying of content. Although certain copy protection systems may involve encryption/decryption, it is useful to understand that copy protection is not the same as content encryption and that copy protection is not the same as copyright protection. Implementation of effective copy prevention measures means that the entire cost for making copies falls on authorized distributors. Accordingly, it would be useful to provide a system in which customers are permitted or encouraged to make copies, and thus bear the cost of copying, while providing for appropriate payments to content owners and other appropriate entities. It would be useful to provide a system that does not prevent (and preferably encourages) copying, but which does provide copyright protection.

Some system involve a key, code or decryption algorithm which is stored in a player device or host computer in a manner which can make it feasible to obtain the code, key or algorithm, or to defeat the protection procedure, by analyzing or modifying the player or host computer, thus potentially gaining access to any disk used in such player or host computer. Accordingly, it would be useful to provide a system in which access to a player or host key or code will not suffice, by itself, to obtain access to multiple different disks.

### SUMMARY OF INVENTION

According to the present invention there is provided a method for a content owner to distribute content to at least a first user, comprising:
encoding the content;
selecting either an electronic or physical distribution of the encoded content; distributing the encoded content according to the selected distribution method; writing the distributed encoded content to an optical disk;
wherein the optical disk includes a unique identifier and wherein the distributed encoded content written on the optical disk is readable by an optical disk reader only in response to the following steps:
distributing a content key. to the optical disk reader in exchange for a payment; generating an access code by using the content key and the unique identifier; and writing the access code onto the optical disk, wherein the optical disk reader may read the distributed encoded content written on the optical disk by using the first access code includes a recognition of certain problems of previous approaches, including as described herein. In one aspect, the present invention provides for distribution of content by allowing some or all parties to decide whether to store content on media in an encrypted or other wise protected form with the media, if desired, having at least a portion which is writeable, e.g., in a user's media reader device, a retail location device, kiosk, vending machine or the like. As used herein, "information content-mastered" refers to a medium in which content is provided on the medium before it reaches the user. A common example is music CDS in which the music is information content-mastered ("ICM") prior to distribution to users. In one aspect, content access information, preferably enabling reading or access to at least portions of the stored content, may be written to or stored on the media, e.g., in exchange for payment. Preferably, the active codes stored on the media are used in conjunction with a media serial number or other media identifier in such a manner that a code which permits access to content on one copy (having a first serial number) will be inoperative to provide access to such content on a second copy (having a second serial number).

In addition to allowing parties to provide for physical distribution (i.e. for distribution of a disk or other physical medium on which content is or can be stored), embodiments of the present invention also can be used in connection with providing electronic distribution, i.e. in which parties can choose to transfer content from a source to a destination by means other than transferring a CD or other physical medium on which the content is stored. In one embodiment, electronic distribution includes distribution of a bit stream, e.g. over various types of communication links such as an Internet link, a telephone link, a satellite or other wireless communication link and the like. In some cases, there may be a distribution chain which involves both electronic distribution and creation (and distribution) of disks or similar physical media. For example, in some embodiments bit stream or electronic distribution is used to transfer content to an electronic point of sale, such as a kiosk, with a disk or other physical medium being used to store such downloaded bits stream content, e.g. for a purchaser. Regardless of whether distribution is by physical distribution or electronic distribution, preferably content owners can exercise a choice whether or not to use a content-key system for protecting content.

According to one aspect, having media identifiers in protected content are distributed in any a number of fashions including blind or targeted mass distribution which may be free distribution if desired, retail location distribution preferably with store-based enablement of at least some content in exchange for payment made at the retail location, via a manned or unmanned kiosk or vending machine, or other distribution methods. Typically, a customer who wishes to enable currently-protected content will make a payment, or a commitment for payment, such as in a remote fashion, e.g., over the Internet, and will receive (preferably electronically and preferably in a fashion transparent and substantially unknown to the customer) a code, calculated to work in conjunction with the media identifier so as to enable the desired content. Such code, or information related to the code, is stored on the media itself. In this fashion, once the content is enabled, it may be accessed in any of the plurality of readers. Furthermore, separate transactions can be performed, if desired, for accessing separate portions of the stored content (such as selected tracks of a multi-track music media) allowing customers to pay for, and access, only the portions of the content desired.

In this way, the distribution of the media can be substantially separated from payment and enablement of content such that it is not necessary to obtain payment, or a commitment for payment, at the time the media is distributed. This makes it feasible to mass distribute and/or blind or target distribute media, e.g., without charge, while still obtaining appropriate payments for content. Because the system permits a particular copy to be played in multiple players yet protects against unpaid-for access to content on copies made from the access-enabled copy, free copying of the media can be permitted and even encouraged, since users of the copies must still make payment in order to obtain access and thus the cost of making copies is shifted from manufacturers to customers. Preferably, media identifiers or other media-stored information can be used to discern whether a payment is being received for a customer-made copy or a manufacturer-made copy and, if desired, different payment requirements may be imposed (e.g., to avoid charging customers for the manufacturing cost of customer-made copies).

Because it is possible to selectively enable some content while protecting other content, media may be distributed with free content which can include, e.g., advertisements, either for protected content thereon or general advertising. Advertising can be presentational or interactive (e.g. prompting for user input and, preferably, providing additional advertising content in response to such prompted-for input). In some embodiments, advertising is provided on fully or partially blank media (intended to be used by customers for copying other media) and price structures for blank and/or for content-bearing media may be established depending on the presence or absence (or the enablement or nonenablement) of advertisements. In some embodiments, non-disabled advertisements are automatica ly displayed by a media reader.

In one aspect, access code calculation procedures are protected by restricting the number of Internet sites or other facilities where access code calculations are performed, such as by providing only one, or only a relatively few number of such sites. Thus, preferably a single access code calculation entity would provide access code calculations for a plurality of different media manufacturers and/or content owners. In one embodiment, the access code calculation site can accumulate a database of information regarding purchasers of content, either directly, from the media or content owners or manufacturers, and/or from electronic means such as "cookie mining" and the like. Such a database is likely to be of relatively high quality since it relates primarily only to paying customers and since it relates to customers of multiple different media manufacturers and/or content owners. Accordingly, one aspect of the present invention involves using, exploiting, selling or renting information from databases obtained at an access code calculation site or entity.

In one aspect, media which stores protected content is distributed to users without the need for payment at the time of media distribution. Payment can be performed at a later time in response to which content may be enabled, and/or users may selectively pay for, and receive enablement of, content such that only portions of content on given media may be accessible at a given time. Following the first enablement of content, access rights may be expanded or otherwise changed, e.g., in response to a second payment.

### BRIEF DESCRIPTION OF THE DRAWINGS

Fig. 1 is a block diagram showing several major components of a system;
Fig. 2 is a block diagram including details of a production component of a system;
Fig. 3 is a block diagram depicting a direct mail distribution system;
Fig. 4 is a block diagram depicting a retail store distribution system;
Fig. 5 is a block diagram depicting a user-copying distribution system;
Figs. 6A-6F are block diagrams depicting sequential stages in media enablement;
Fig. 7 is a block diagram depicting advertising-content;
Fig. 8 is a block diagram depicting flow of information and codes among various entities; and
Fig. 9 is a block diagram illustrating a flexible distribution system.

### DETAILED DESCRIPTION OF THE PREFERRED EMBODIMENT

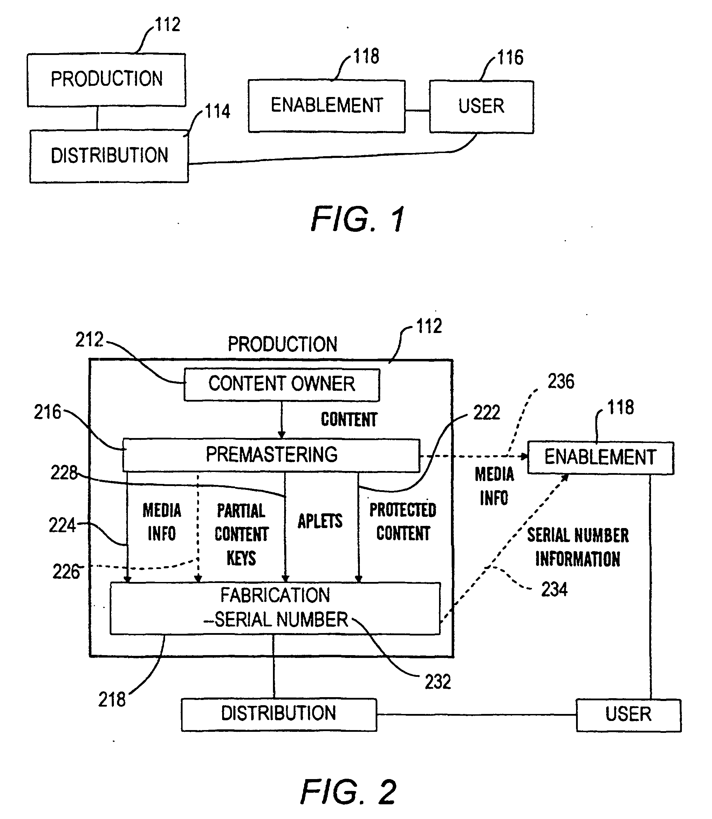

As depicted in Fig. 1, in one embodiment media are produced by a production system 112, with the media including serial numbers or other preferably unique (or sufficiently distributed) media identifiers and preferably some media including content, for example, audio, video, or other image, text, software or other storable content, at least some of which is encrypted or otherwise read-protected. The media preferably includes at least a portion which is writeable, such as being serially-writeable. Preferably, the content is provided in a relatively efficient fashion such as by injection molding or other mastering techniques. One or more distribution systems 114 are used for providing such media to users 116 who can, if desired, enable some or all of the protected content 118, e.g., as described below.

As depicted in Fig. 2, typically a content owner 212, who may be, e.g., an author, composer, publisher, music or motion picture production company and the like, provides content 214 to a premastering facility 216. It is contemplated that typically the content 214 will be provided in unencrypted form, typically in digital form, although at least some features of the present invention can be used when content is provided in encrypted and/or in nondigital, e.g., analog, form. Although premastering 216 is depicted, in Fig. 2, as a separate unit from the content owner and the fabrication, it is possible for some or all units of production 112 to be provided by a single entity. Premastering 216 provides a number of items to a injection molding or other fabrication facility 218. In some embodiments, production of content involves encrypting or otherwise modifying the content. In other embodiments, content may be protected by merely setting or clearing read permission flags for various content which are recognized and enforced by media readers. In other embodiments, content may be protected by selectively encrypting or modifying file information such as a file allocation table (FAT) and the like. In the depicted embodiment, the protected content 222 is passed to the fabrication facility 218. Preferably, media information is also provided 224 which may include information such as type of media (video verses text verses audio and the like) format (both data encoding format and sector and similar information, i.e., media formatting information) and/or user-intended information (titles, authors, composers, artists, lengths or sizes of content and the like). In some embodiments, partial content-enablement keys or codes may be provided 226. For example, in some embodiments, it is desired to provide access permissions which are based on three or more items, such as a combination of a media serial number, a partial access code 226 and/or a stored access code (e.g., in exchange for payment as described below). In some embodiments, it may be desired to positively control access to all content, such that all content is associated either with a code preventing access or with a code denying access. In these configurations, when there is some content which should be initially available to a user (such as instructions on how to use disk, instructions on how to make payments and/or obtain access, advertisements or the like) appropriate codes permitting access to such information may be included 226. In other embodiments, default systems may be used, e.g., such that access to particular contents is denied unless access permission codes are stored on the disk or systems in which access to contents is always permitted unless a code denying access is stored on the disk.

Software useful in connection with obtaining or storing access codes and/or otherwise using the disk, are preferably stored on the disk 228. These can include, e.g., small applications (applets) which recognize and/or display certain types of information, such as instructions, advertising and the like, applications which assist in, or which automatically connect a user to an Internet site or other payment or access code calculation site, and the like.

The fabrication facility 218 generates the media containing the various items 222, 224, 226, 228 received from premastering 216, as well as providing a serial number or other media identifier 232. The media identifier may include information regarding or identifying the content owner or manufacturer, date of production and similar information. The media identifier in some embodiments is preferably unique to each optical disk or other media. It is possible, however, to provide configurations in which the media identifier is not necessarily strictly unique, in which the probability for duplication is sufficiently low that there is relatively little likelihood of substantial loss of income from unauthorized use or copying arising from such duplications.

In some embodiments, it is useful for enablement system 118 to have access to information related to serial numbers 232, media information 224 and the like. For example, it may be useful for an enablement facility 118 to receive information 234 specifying a range of serial numbers which was used for blank media and another range of serial numbers which ,,vas used for content-bearing media. It may be useful for an enablement facility I 18 to receive information 236 specifying that a certain disk title is associated with, for example, 17 separately-enablable media tracks, and or indicating that such media tracks are associated with particular ranges of serial numbers.

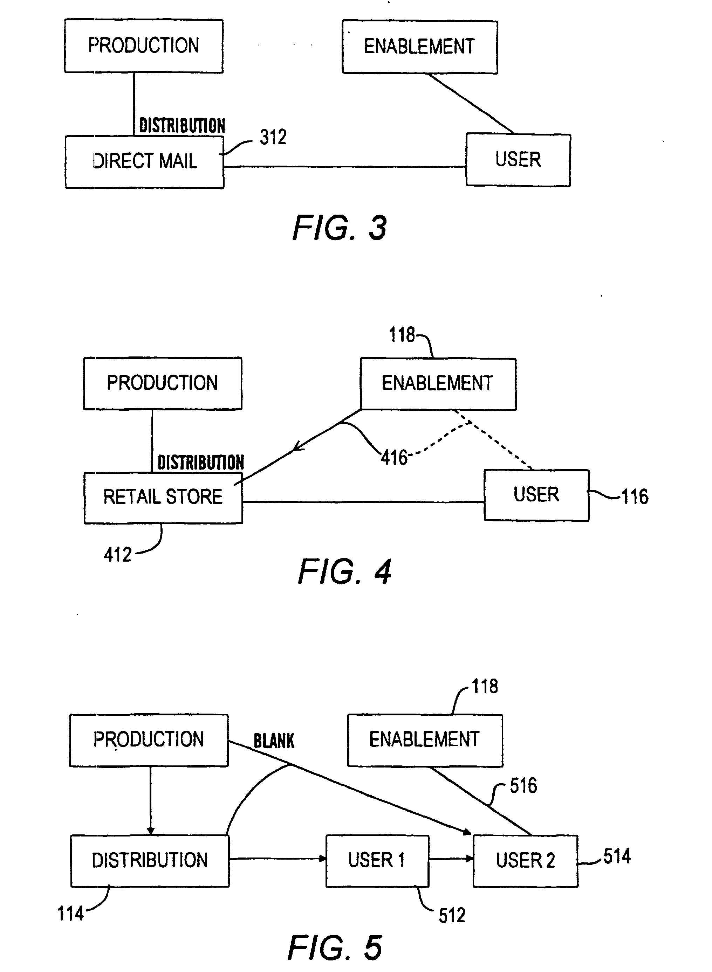

Distribution of the fabricated media can be performed in a number of fashions. As depicted in Fig. 3, distribution can be unsolicited, e.g. by direct mail, including in a blind or targeted fashion, and can be free distribution or distribution at reduced cost 312.

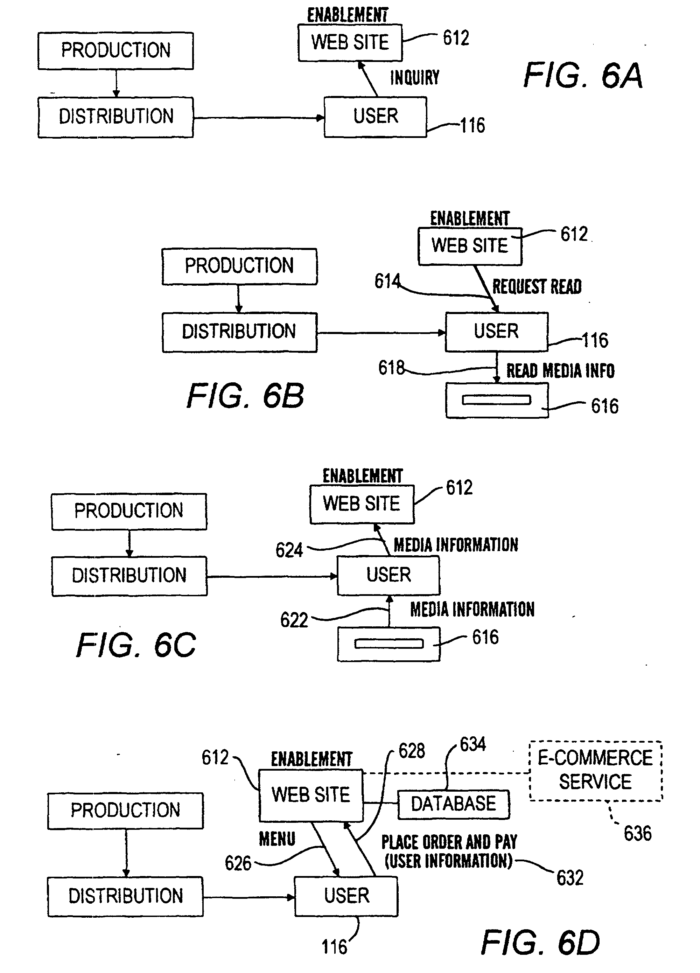

In the embodiment of Fig. 4, distribution occurs when a user 116 visits a retail store 412. In this embodiment, the media stock maintained by the retail store is at least partially disabled (such as being encrypted). In this way, users cannot access content on the media until the retail store has enabled such content, e.g., by receiving access codes 416 from an enablement facility 118. This not only discourages shoplifting but also provides users 116 with flexibility such that the user may request that only portions of the content on the media (e.g., certain initially desired music tracks on a music medium) will be enabled at the retail location 412. In one embodiment of the invention, if the user pays for only partial enablement, the user may later arrange 416 with an enablement facility 118 (e.g., as described below in connection with Figs. 6A through 6F) for enabling additional content. If desired, some or all steps involved in the enablement can be performed in a self-service fashion, such as by a user interacting with a kiosk or vending machine which can receive payment (e.g. using a coins or cash handler) or payment authorization (e.g. for authorizing a charge account or debit account, e.g. using a credit card reader). In this sense a retail location can be a kiosk or vending machine.

In the embodiment depicted in Fig. 5, after a first user 512 receives media (by any of the various distribution channels 114), the user 512 may make one or more copies, e.g., by copying onto a blank disk, which may be distributed to another user 514. The blank disk contains at least some writeable In this way, some of the costs of copying, such as the cost of the blank disk, the time and facilities for making copies and the like, is bome by the user 512. In at least some configurations, the copy distributed to the second user 514 has at least some content which is not enabled, e.g., because the serial number stored on the second copy 232 will differ from the serial number on the source disk. Accordingly, the second user 514, in order to access the content, uses an enablement facility 118 to obtain appropriate access codes, preferably in exchange for payment, 516, e.g., as described more thoroughly below.

As depicted in Fig. 6A, in one embodiment, in order to achieve enablement of some or all protected content, a user initially sends an inquiry to an enablement facility which, in the depicted embodiment is an Internet web site 612. The web site 612 sends a message to the user's computer or other Internet appliance which includes a read request 614 for reading information from the media. In response, the user's computer or Internet appliance sends appropriate signals to a media reader such as an optical disk reader as described in Serial No. 09/315,398, supra, 616 for reading appropriate media information 618 (Fig. 6B). The media reader 616 reads media information and transfers this information 622 to the user's personal computer (PC) or Internet appliance whence it is transferred 624 to the web site 612 (Fig. 6C). Preferably, the transferred media information 624 includes information relating to identification of protected content sufficient for the web site 612 to formulate menu information 626 (Fig. 6D) for presentation to the user 116. For example, the media information 624 may include titles or other descriptors of content which is stored on the disk and information about access options that may be obtained by the user. When access options relate to content which is not currently accessible to the user, the access option may include one or more options for paying to obtain various types of access. When access options relate to content which is currently accessible to the user, access options may include options for obtaining various types of enhanced access such as access for additional or longer periods of time, different types of access (such as write access in addition to read access, access to additional components such as illustrations, animation, music, additional languages, subtitles and the like).

Although the embodiment depicted in Figs. 6A through 6D provides for displaying a menu of access options to the user which is generated at a remote location such as a web site 612, it is also possible to provide configurations in which all the information and software needed for displaying access option menus to the user are provided locally, such as on the media itself and/or the reader 616.

Although it is possible to configure systems such that a user can obtain content access via a website run by, e.g. the content provider 916, the publisher or producer 936, and/or the content key provider 926, in one embodiment, the content is protected in such a way that content access (for at least some content) requires accessing a web site run or controlled by the entity 312, 412, 114 (Figs 3, 4and 5) which distributed the media. If, e.g., a user obtains a disk, or other medium, from, e.g. retail location X (e.g. purchased at location X at full price, at reduced price or obtained gratis), even though some content (possibly including advertising or web-access or other instructions, as well as, potentially, music, video text or other content) may be available without visiting a web site, in at least one embodiment, in order to access certain content, a user must access the web-site run by, or controlled or used by, retail location X. By requiring the user to access a web location associated with retail location X (as opposed to, e.g. a content owner 916, content key provider 962 or the like), retail location X can benefit in any of a number of ways. Retail location X can use the web site access to obtain demographic or marketing information from the user (either prompting for user input, or fully or partially automatically, such as via Internet "cookies"), with the information being used by retail location X or for co-marketing purposes (e.g. sharing information with other vendors, such as record producers, fan clubs, etc.). Retail location X can use the web access to present advertising to the user, possibly as a condition for receiving free or reduced-cost content access. Retail location X can provide some or all content access in exchange for monetary payment.

If the user 116, viewing a menu or similar information, decides to request additional access to the media, the user makes selections or otherwise provides inputs to the user's PC or Internet appliance which results in one or more messages 628 being sent to the web site 612 requesting the placing of an order for additional access and authorization for making payments (such as charging to a credit card or other account). In some embodiments the web site 612 may be configured to request or elicit user information 623, e.g., for storing in a database 634 such as information identifying the user, user address, phone, fax or e-mail number, and the like. In some embodiments, user information 632 may be obtained substantially automatically such as by uploading information from the user's computer or other Interact appliance. Although it is possible to configure the web site 612 such that it implements the necessary electronic commerce (provides the proper charge to the user's credit card account or the like). It is contemplated, that, in many situations, web site 612 will couple to the services of an electronic commerce (e-commerce) service 636, e.g., in a manner that will be understood by those of skill in the art after understanding the present disclosure.

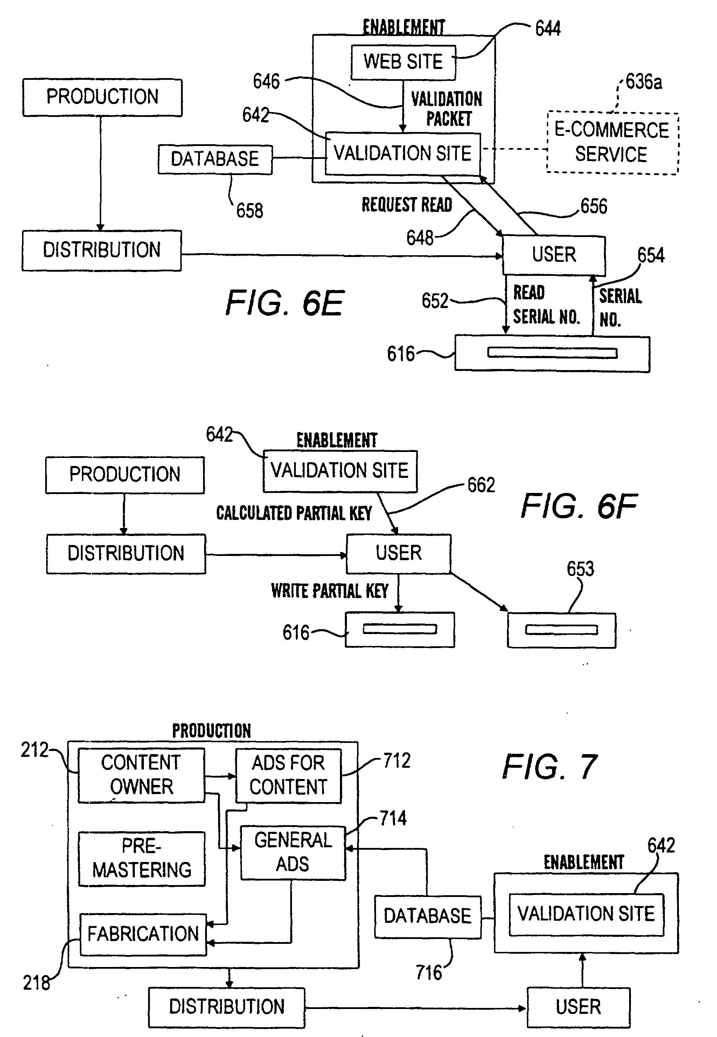

In order to provide the additional access which the user has ordered, certain information is preferably provided to, and recorded on, the media as described below. Although it is possible to implement embodiments of the present invention by having the web site 612 perform necessary access code calculations, it is generally preferred to have a relatively limited number, such as one or few, entities with the capability of performing the necessary calculation. This is because the algorithms used for performing such calculations are preferably kept secret and unavailable to the general public (in order to prevent users from obtaining unauthorized or unpaid-for access to content). However, it is contemplated that there may potentially be a relatively large number of different web sites 612 to which a user might be able to connect for selecting access options and/or making payments. Accordingly, it is generally preferred to provide a separate validation site 642 to which multiple web sites 634 may couple. Although it is possible to configure the system such that the user continues to communicate directly with the web site 644 which acts to pass messages to and from the validation sites 642, it is preferred to perform a redirection wherein the web site 644 passes a validation packet 646 to the validation site 642 and, thereafter, the user sends messages to and receives messages from, the validation site 642 directly (Fig. 6E). Preferably this is done in a substantially transparent fashion such that the user may not even be aware that a redirection has taken place and, in any case, can proceed with the transaction without knowing or being aware of the resource locator or other address of the validation site 642 (e.g., as a security precaution). Although in the configuration depicted in Fig. 6D, the payment was performed by a coupling of the web site 612 to the e-commerce service 636, it is also possible to provide configurations in which payment processing is performed by or through the validation site, e.g., by a coupling of the validation site to an e-commerce service 636a.

Preferably, the access code which enables access to content is a code which operates in conjunction with the media serial number. For example, the media reader 616 may be configured such that access to given content is permitted only if a recognized access code results from a hashing or other combination or procedure performed on both the serial number of the media (read directly from the media) and a code stored on the media. Accordingly, the appropriate code, in order to achieve given access, will be different for every different serial number and thus for every different disk or other media. In order for the validation site 642 to calculate the proper code for a given medium, the validation site obtains the disk serial number or other media identifier, e.g., by sending a request 648, in response to which, the user's PC or Internet appliance sends commands for reading the serial number 642 to the reader 616 which then responds with the serial number or other media identifier 654 which is then transferred 656 to the validation site. Preferably, the serial number is encrypted, e.g. using an encryption process preferably stored or embedded in the player 616, before the serial number is transmitted. If desired, the system can also be configured such that other information is returned such as user information, e.g., for storing in a database 658. The validation site 642 calculates a calculated partial key which, when properly combined with the media serial number, will result in an access code recognized by the player 616 as permitting the desired access. The calculated partial key is then transmitted 662 (Fig. 6F), preferably in an encrypted form which can be decrypted by a decryption process stored or embedded in the player 616, to the user's computer or Internet appliance which controls the reader 616 for storing the calculated partial key (or information based thereon) onto the writeable portion of the media. The user can thereafter access the desired content, including using a second, different player 653 if desired, without the need to record or enter additional codes. In one embodiment, the media player tests the recorded code to determine if it will result in a proper access code. In this way, if there has been a data transmission or other error, the player can request that the validation site recalculate or retransmit codes.

As depicted in Fig. 7, in some embodiments, when the disk or other media is fabricated 218 it includes one or more advertisements which may be advertisements for protected content 712, e.g., provided from the content owner 212 publisher and the like, and/or one or more general advertisements 714. It is anticipated that general advertisements 714 will be most effectively selected or configured in conjunction with a demographic or customer base database 716 such as the database compiled by the validation site 642. As noted above, it is preferred that the validation site 642 be coupled to a plurality of web sites 644 and preferably not limited to a single media publisher or fabricator. Accordingly, a database 658 from a validation site 642 is expected to be of relatively high quality since it contains information on media access customers for a variety of different publishers and/or content providers.

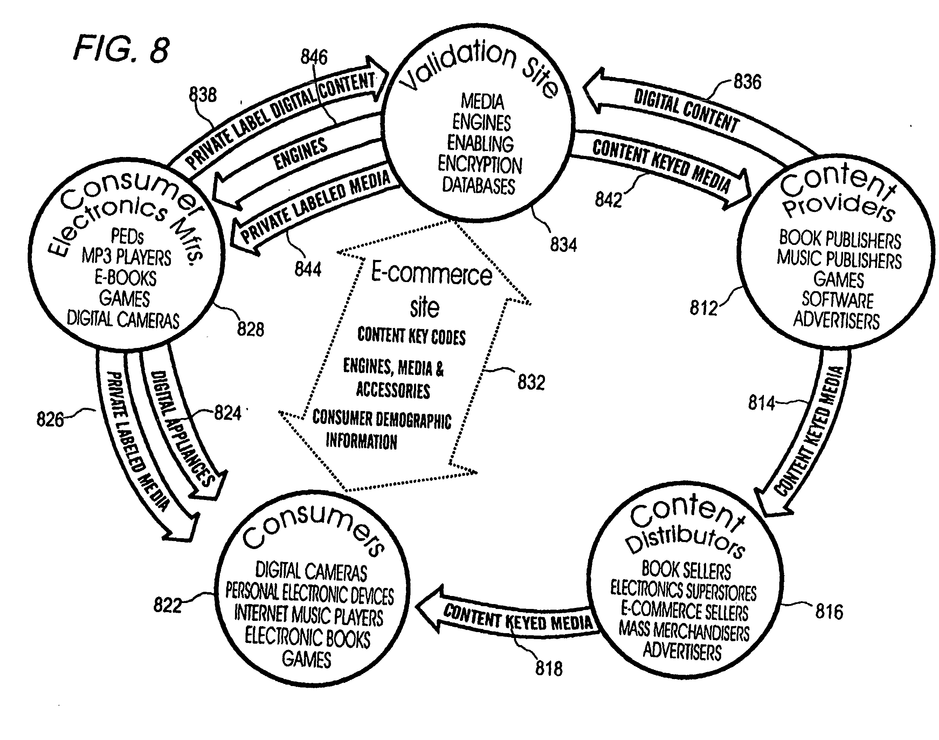

In the configuration depicted in Fig. 8, the content provider 812 may include, for example, book publishers, music publishers, game or software providers or publishers and advertisers. In one embodiment, publishers will provide content in digital format for mastering (molding) onto media. In addition to protected, e.g. copyrighted, content, publishers may add free promotional, attract or other materials. Packed media can be distributed through the publisher's existing traditional distribution channels. For example, protected-content media may be provided 814 to content distributors 816 which can include, for example, book sellers, electronic stores, mass merchandisers, advertisers, electronic commerce sellers and the like. The media are distributed 818, through various channels, to consumers 822 in the form of, or useable in connection with, personal electronic devices (PED) such as digital cameras, Internet music players, electronic books, games and the like. Consumers may also obtain digital appliances 824 and/or private labeled media 826, e.g., from consumer electronic manufacturers such as makers of personal electronic devices, MP3 players or other music players, electronic books, games or digital cameras, e-book readers, and other electronic devices including a variety of personal electronic devices (PEDs) and/or Interact appliances 828. Media can be distributed through traditional retail channels such as camera stores, computer stores, bookstores, grocery stores, catalog or Internet mail-order, etc. Via an Interact connection, such as via a web site, an e-commerce site and the like 832, consumers can communicate and/or receive keys or codes (e.g. for accessing protected information), engines or other software, media and accessories, and/or consumer demographic information, to or from a validation site 834. The validation site may receive digital content 836, 838 from content providers or manufacturers 812, 828 and/or can provide protected media 842, 844 and/or engines or other applications or software 846. The validation site 834 can generate such media or engines, as well as perform enabling of access (e.g. via keys, codes and the like), content mastering and/or encryption, and accumulation or storage of consumer demographic databases.

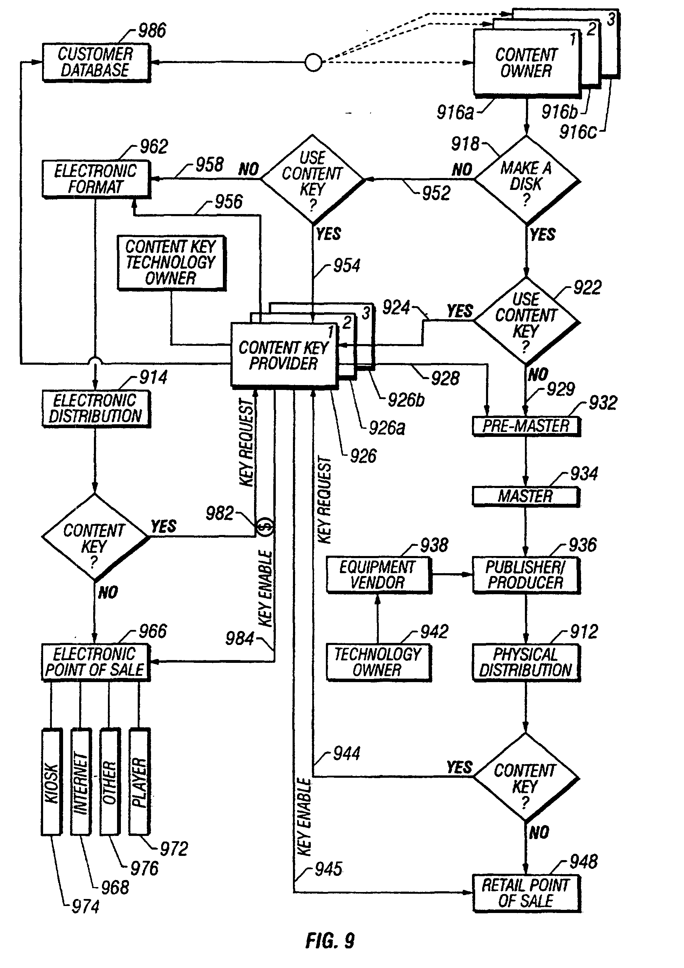

In the embodiment of Fig. 9, various parties involved can make decisions regarding whether content is to be distributed by physical distribution 912, electronic distribution 914 or both. If, for example, a first content owner 916a chooses to make a disk 918 or other physical medium, the content owner has the option to use, or not to use, a content key 922 or the like, for protecting content. If it is determined to use a content key in connection with physical distribution 924, the content owner, who will typically be separate from a content key provider 926, will, in the depicted embodiment, provide content to the content key provider 926 who will then return content 928 in a form which is encrypted or otherwise content-key protected, generally as described above. The protected content is then subjected to premastering 932 (generally as described above). If content key is not being provided 929, the content is provided directly to premastering 932. The premastered content is used to create a master 934 from which the disks can be produced. Typically (but not necessarily) the content owner 916a will be different from the disk publisher/producer 936. In turn, the publisher/producer 936 may be (but is not necessarily) different from the vendor of the equipment 938 used for producing the disks or similar media and may be different from the owner of the technology involved in making the disk 942 who, typically, will receive remuneration for the use of the technology. In the depicted embodiment, since the physical distribution 912, in this branch, is using content key technology 928, physical distribution 912 may involve providing remuneration to the owner of the content key technology, who may be different from the content key provider 926. If content key is being used, as part of the distribution process, such as when a user makes a purchase, a key request is sent 944 to the content key provider 926, e.g. identifying the access which has been paid for. The key request 944 may, in some embodiments, also include information indicating the type of enablement which is requested or authorized, such as enabling only certain tracks on the medium, providing enablement for only a certain period of time and the like, as described generally above. The content key provider 926 responds by sending a key enable 945, e.g. to the retail point of sale 948. Transmission of key requests and enables 944, 945 can be by any of a number of communication schemes known to those of skill in the art, including communication over the Internet, over telephone lines, over satellite or other wireless links and the like. In one embodiment, the content-key provider 926 provides remuneration to the owner of content key technology at the time the content is encoded or encrypted. In the depicted embodiment, there are several different content key providers 926, 926a, 926b and the key enable 944 is sent to the provider who encrypted or encoded the content 928. In other words, the physical distribution process 912 may involve the point of sale personnel 948 sending the key request 944 to the content key provider 926 who is appropriate for that particular disk or other medium.

The embodiment of Fig. 9 provides substantial flexibility at least in the sense that content owners can also use the system when they have decided they do not wish to make a disk 952. If the content owner nevertheless wishes to use a content key, the content is sent 954 to the content-key provider 926 who then returns 956 an electronic-format content which has been encoded or encrypted to use the content-key system. Otherwise (i.e. if the content owner does not wish to use a content-key 958, the content is provided as an electronic format 962 which can be sent directly for electronic distribution 914. A number of types of electronic distribution are possible which, together or separately, define an electronic point of sale 916. For example, in one embodiment a user may download electronic format content 962 in bit stream fashion for real-time use or reproduction, at a user's personal computer, e.g. over the Internet 918. If, for example, this is done in a pure reproduction sense, without long term, post-reproduction storage of the bit stream, then the distribution is purely electronic. It is also possible to provide embodiments in which the downloaded bit stream is stored in various fashions, including in a computer memory, e.g. on a PC or on a dedicated player device such as an MP3 player 972, or recorded onto a physical medium, e.g. using a kiosk or similar station 974 (e.g. containing a disk writer apparatus) or other device 976.

Regardless of the particular type of electronic point of sale 966, as with physical distribution, if the distributed bit stream was content-key protected, then, in order for the user to use the electronically-distributed content, user sends a key request 982 to the content key provider 926 (preferably with an authorization to charge an account or otherwise pay for the access) and preferably with additional information such as the type of enablement requested, generally as described above. In response, the content key provider sends a key enable 984 which can be used for enabling use or reproduction of the content in the various playback or use devices 968, 972, 974, 976.

As described above, a relatively wide-ranging customer database 986 may be developed, e.g. by the content key provider 926 who can typically be in a position to obtain customer information from a variety of different types of customers, since the content key provider 926 will typically serve as content key systems for a wide variety of different types of content. In particular, the customer database 986 may contain customer information with respect to customers of several different content owners 916a, 916b, 916c. Accordingly, there can be significant value to any one of the content owners 916a (and significant remuneration to the owner of the customer database 986) for obtaining customer information relevant to customers of other content owners 916b, c.

In any of the various systems described herein for providing information or content writeable or modifiable on a disk or other medium, which is not necessarily accessible to an unauthorized user, such capability can also be useful in configuring the medium for transferring value from one party to another. For example, in one embodiment, the medium can be encoded with information authorizing the bearer (or authorizing a party identified by the information) to receive a defined amount of credit. For example, a first party could present as a girl, to a second party, a disk which was encoded with information indicating that the recipient was entitled to, e.g., $10.00 worth of music (or other) content. Whereupon, the recipient could present the disk, e.g. at a retailer or at an electronic distribution location, and select $10.00 worth of music for downloading, e.g. onto the disk, whereupon the disk would be re-encoded to indicate that the credit had been depleted. Alternatively, the user could choose to download only $2.00 worth of music at a first time period, whereupon the disk would be re-encoded to show the disk had an $8.00 credit or value. This embodiment can, if desired, be used without restriction as to the manner in which the credit is to be employed, i.e. can be used generally as a monetary value token.

In light of the above description, a number of advantages of the present invention can be seen. The present invention can assist in distributing content to potential users or consumers, e.g., by providing a system in which distribution of content-bearing media is separate from enablement and/or payment systems. The present invention makes it easier to implement a system in which users can readily receive stored content and can obtain access to only that content which is desired, including, in some configurations, only portions of content on given media. The present invention can facilitate systems in which protected content can be readily copied and in which copied content is accessible only after payment of appropriate fees. The present invention can assist in providing a wide variety of different types of access, as selected or needed by different users.

A number of variations and modifications of the invention can be used. It is possible to use some features of the invention without using others. For example, it is possible to use mass or blind distribution of content with later enablement in return for payment, without implementing collection of user information for accumulating databases. It is possible to provide processes which perform steps in different order than those depicted or described or which have more or fewer steps. Although the configuration of Fig. 9 depicts a process in which the decision whether to make a disk is made before a decision whether to use a content key is made, it is possible to make the decisions in the opposite order. Although Fig. 9 depicts distributing by physical distribution or by electronic distribution, it is possible for a content owner to distribute by both physical distribution and electronic distribution.

## Claims

1. A method for a content owner to distribute content to at least a first user, comprising:
encoding the content;
selecting either an electronic or physical distribution of the encoded content; distributing the encoded content according to the selected distribution method; writing the distributed encoded content to an optical disk;
wherein the optical disk includes a unique identifier and wherein the distributed encoded content written on the optical disk is readable by an optical disk reader only in response to the following steps:
distributing a content key to the optical disk reader in exchange for a payment; generating an access code by using the content key and the unique identifier; and writing the access code onto the optical disk, wherein the optical disk reader may read the distributed encoded content written on the optical disk by using the first access code.

2. The method of claim 1, wherein distributing the first permission code comprises distributing the content key via an Internet communications link.

3. The method of claim 1 or 2, wherein the content includes content selected from among text content, music content, software and motion picture content.

## Patentansprüche

1. Verfahren für einen Inhaltseigentümer zur Verteilung von Inhalt an mindestens einen ersten Benutzer, das Folgendes umfasst:
Codieren des Inhalts;
Auswählen entweder einer elektronischen oder einer physikalischen Verteilung des codierten Inhalts; Verteilen des codierten Inhalts gemäß dem gewählten Verteilungsverfahrens; Schreiben des verteilten codierten Inhalt auf eine optische Speicherplatte;
wobei die optische Speicherplatte ein eindeutiges Etikett umfasst und der verteilte codierte Inhalt, der auf die optische Speicherplatte geschrieben worden ist, von einem Lesegerät für optische Speicherplatten nur als Reaktion auf die folgenden Schritte gelesen werden kann:
Verteilen eines Inhaltsschlüssels an das Lesegerät für optische Speicherplatten im Austausch für eine Bezahlung; Erzeugen eines Zugriffscodes durch Verwendung des Inhaltsschlüssels und des eindeutigen Etiketts; und Schreiben des Zugriffscodes auf die optische Speicherplatte, wobei das Lesegerät für optische Speicherplatten den verteilten codierten Inhalt, der auf die optische Speicherplatte geschrieben worden ist, durch Verwendung des ersten Zugriffscodes lesen kann.

2. Verfahren nach Anspruch 1, wobei das Verteilen des ersten Berechtigungscodes das Verteilen des Inhaltsschlüssels über eine Internetkommunikationsverbindung umfasst.

3. Verfahren nach Anspruch 1 oder 2, wobei der Inhalt einen Inhalt umfasst, der aus Textinhalt, Musikinhalt, Software- und Filminhalt ausgewählt wird.

## Revendications

1. Un procédé permettant à un propriétaire de contenus de distribuer des contenus à au moins un premier utilisateur, comprenant :
le codage des contenus ;
la sélection d'une méthode de distribution soit électronique soit physique des contenus codés, la distribution des contenus codés selon la méthode de distribution sélectionnée, l'écriture des contenus codés distribués sur un disque optique ;
où le disque optique comprend un identifiant unique et où les contenus codés distribués écrits sur le disque optique sont lisibles par un lecteur de disque optique uniquement en réponse aux opérations suivantes :
distribution d'une clé d'accès aux contenus au lecteur de disque optique en échange d'un paiement, génération d'un code d'accès en utilisant la clé d'accès aux contenus et l'identifiant unique et écriture du code d'accès sur le disque optique, où le lecteur de disque optique peut lire les contenus codés distribués écrits sur le disque optique en utilisant le premier code d'accès.

2. Le procédé selon la Revendication 1, où la distribution du premier code d'autorisation comprend la distribution de la clé d'accès aux contenus par l'intermédiaire d'une liaison de communication Internet.

3. Le procédé selon la Revendication 1 ou 2, où les contenus comprennent des contenus sélectionnés parmi les types texte, musique, logiciel et film.
